# EUROPÄISCHE PATENTSCHRIFT

(11) **EP 0 571 325 B1**
(45) Veröffentlichungstag und Bekanntmachung des Hinweises auf die Patenterteilung: **19.06.1996**
(21) Anmeldenummer: 93810318.1
(22) Anmeldetag: 30.04.1993
(51) Int. Cl.: G02B 6/38

(54) **Stecker für einen Lichtwellenleiter**
Plug for an optical fibre
Fiche pour une fibre optique

(30) Priorität: 20.05.1992 CH 1627/92
(43) Veröffentlichungstag der Anmeldung: 24.11.1993
(73) Patentinhaber: DIAMOND S.A., CH-6616 Losone-Locarno (CH)
(72) Erfinder: Marazzi, Silvio, CH-6654 Cavigliano (CH); De Marchi,Silverio, CH-6646 Contra (CH)
(74) Vertreter: Wenger, René

(56) Entgegenhaltungen:
- GB-A- 2 057 711
- US-A- 4 804 243

## Beschreibung

Die Erfindung betrifft einen Stecker für einen Lichtwellenleiter gemäss dem Oberbegriff von Anspruch 1. Eine axiale Federung der Steckerstifte ist heute bei den meisten Steckverbindungen für Lichtwellenleiter unabdingbar, um eine permanente Übertragungsqualität zu gewährleisten. Die Federung bewirkt, dass die Stirnseiten von einander gegenüberliegenden Steckerstiften gegeneinander gepresst werden und zwar selbst dann, wenn auf einer Seite eine Zugbelastung auf den Steckerkörper einwirkt.

Bereits durch die DE-U-82 21 983.4 ist ein Lichtwellenleiter-Steckverbinder bekannt geworden, bei dem der Steckerstift im Steckerkörper über ein federelastisches Zwischenglied gehalten ist. Das Federelement kann dabei eine Schraubendruckfeder sein, oder es kann gemäss einer Ausführungsform auch eine direkt am Steckerstift angeordnete Membrane sein. In vielen Fällen ist jedoch der Steckerstift ein hochpräzise bearbeitetes Teil aus einem harten Werkstoff, wie z.B. Hartmetall oder Keramik, so dass die Integration von Federelementen am Stekkerstift nicht möglich ist. In der Praxis hat sich daher die separate Schraubendruckfeder zur Abfederung des Steckerstifts durchgesetzt. Ein Nachteil bekannter Stecker besteht in der relativ komplizierten Bauweise, welche die Montage zahlreicher Einzelteile, wie z.B. Federn, Sprengringe, Ringmuttern usw. erfordert.

Es ist daher eine Aufgabe der Erfindung, einen Stecker der eingangs genannten Art zu schaffen, bei dem das Problem der axialen Federung des Steckerstifts auf einfachste Weise gelöst ist und zwar unabhängig davon, aus welchem Material der Steckerstift gefertigt ist. Eine weitere Aufgabe der Erfindung besteht darin, den Montageaufwand für den Stecker durch Reduzierung der Einzelteile zu senken. Diese Aufgabe wird erfindungsgemäss mit einem Stecker gelöst, der die Merkmale im Anspruch 1 aufweist. Die einstückige Ausbildung des Federelements, wenigstens eines Teils des Steckerkörpers und ggf. der Aufnahmehülse bewirkt, dass unabhängig von der Materialwahl für den Steckerstift stets ein Bauteil mit gleichen Federeigenschaften zur Verfügung steht. Aufwendige Montagearbeiten, beispielsweise zum Einsetzen einer Schraubendruckfeder oder dergleichen, fallen vollständig weg. Besonders vorteilhaft wird die Einheit bestehend aus Aufnahmehülse, Federelement und Steckerkörper aus Kunststoffmaterial hergestellt. Durch Spritzgiessen lassen sich dabei relativ kompakte und komplizierte Teile herstellen. Dabei ist es z.B. auch möglich, das Federelement als skelettartig unterbrochenen Hohlzylinderabschnitt auszubilden.

Der Steckerstift kann aus Metall, Metallkeramik oder Keramik hergestellt sein, und er kann in die Aufnahmehülse eingeklebt werden. So können auch schwer zu bearbeitende Werkstoffe eingesetzt werden, ohne dass der Federungsmechanismus einen anderen Aufbau erfordert. Selbstverständlich kann auch der Steckerstift aus einem Kunststoffmaterial gefertigt sein, wobei es in bestimmten Anwendungsfällen sogar denkbar ist, dass der Steckerstift mit der Aufnahmehülse einstückig ausgebildet ist, bzw. dass eine eigentliche Aufnahmehülse ganz wegfällt und dass der Steckerstift einstückig mit dem Federelement ausgebildet ist.

Weitere Vorteile und Einzelmerkmale der Erfindung sind aus der nachfolgenden Beschreibung von Ausführungsbeispielen und aus den Zeichnungen ersichtlich. Es zeigen:
- Figur 1: einen teilweise aufgeschnittenen Stecker mit den Merkmalen der Erfindung in perspektivischer Darstellung,
- Figur 2: den Stecker gemäss Figur 1 mit alternativen Detailansichten,
- Figur 3: einen Querschnitt durch einen Stecker in stark vereinfachter Darstellungsweise, und
- Figur 4: einen Querschnitt durch ein alternatives Ausführungsbeispiel eines Steckers.

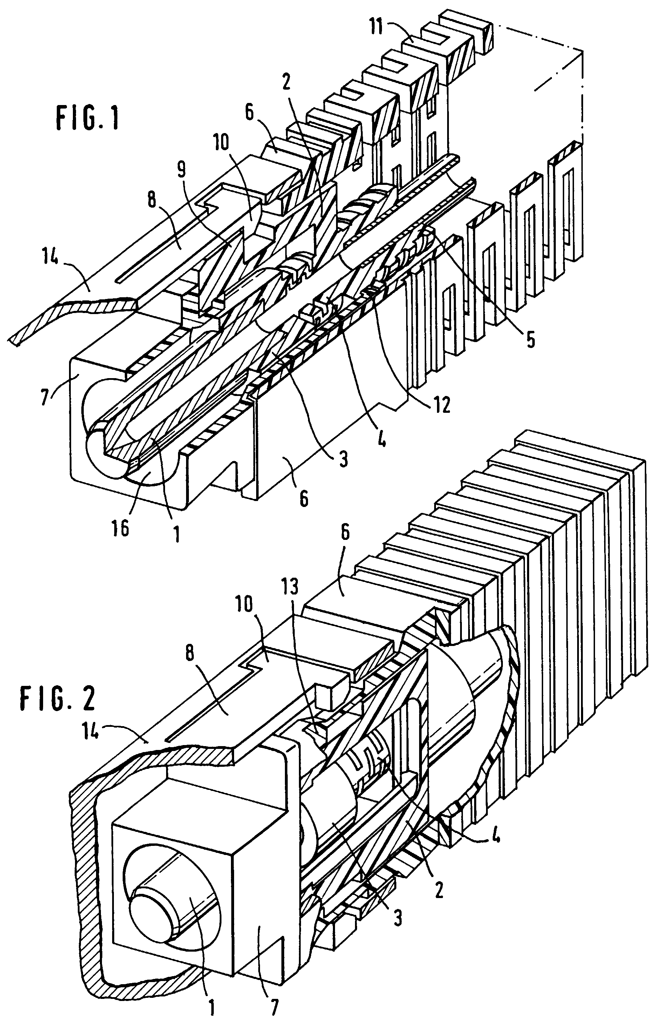

In den Figuren 1 und 2 ist ein Stecker dargestellt, der als zentrales Teil einen Steckerkörper 2 aufweist, welcher einstückig mit einer Aufnahmehülse 3 und mit einem Federelement 4 ausgebildet ist. Die Aufnahmehülse und das Federelement haben eine etwa hohlzylindrische Form, während der Steckerkörper eine etwa rechteckige Querschnittsform aufweist. Ebenfalls einstückig mit dem Steckerkörper ausgebildet ist eine Nabe 5 zur kraftschlüssigen Aufnahme eines hier nicht näher dargestellten Kabels.

Der Steckerkörper 2 hat an zwei sich gegenüberliegenden Seiten eine Sperrleiste 9, welche dazu dient, den Stecker in einem Buchsenteil 14 zu verriegeln. Zu diesem Zweck hat das Buchsenteil eine federnde Zunge 8, an deren Ende eine Sperrklinke 10 angeordnet ist. Beim Erreichen der erforderlichen Einstecktiefe rastet die Sperrklinke 10 hinter die Sperrleiste 9.

Der eigentliche Steckerstift 1, beispielsweise aus Hartmetall oder aus Keramik, ist in die Aufnahmehülse 3 eingeleimt. Zum Schutz des Steckerstifts ist auf den Steckerkörper 2 ein Endstück 7 mit Hilfe von Verriegelungslappen 12 aufgeschnappt. Das Endstück hat eine Bohrung 16, welche den grössten Teil des Steckerstifts 1 umgibt, wobei zwischen der Innenwand der Bohrung und dem Steckerstift ein Ringspalt gebildet wird.

Der Steckerkörper 2 ist axial verschiebbar in einem Steckergehäuse 6 gelagert. Das Steckergehäuse 6 umgibt den grössten Teil des Steckerkörpers und es ist an seinem kabelseitigen Ende mit einem Knickschutz 11 versehen. Aus Figur 2 ist ersichtlich, dass die Sperrleiste 9 aus einer Öffnung im Stekkergehäuse 6 ragt und dass das Steckergehäuse auf beiden Seiten der Sperrleiste 9 eine Rampe 13 aufweist.

Die Rampe 13 bewirkt, dass bei einer Zugkraft am Steckergehäuse 6 letzteres relativ zu dem noch fest eingeklinkten Steckerkörper 2 zurückfährt, worauf die Rampe 13 die Sperrklinke 10 soweit hochdrückt, bis diese die Sperrleiste 9 freigibt. Danach kann der Stecker aus dem Buchsenteil 14 herausgezogen werden. Dieses System der Push-Pull-Verriegelung ist an sich bereits bekannt.

Das Federelement 4 ist skelettartig durchbrochen, so dass es in axialer Richtung die erforderlichen Federeigenschaften aufweist. Das Federelement 4 begrenzt aber auch auf besonders vorteilhafte Weise das radiale Spiel des Steckerstifts 1. Je nach Ausgestaltung des Federelements können verschiedene Federcharakteristiken erzielt werden. Der Stecker gemäss den Figuren 1 und 2 besteht nur noch aus drei Kunststoffteilen, nämlich aus dem Steckerkörper 2, dem Endstück 7 und dem Steckergehäuse 6. Dazu kommt der Steckerstift 1 aus einem dem Einzelfall angepassten Material. Ersichtlicherweise lässt sich dieser Stecker sehr einfach zusammenbauen.

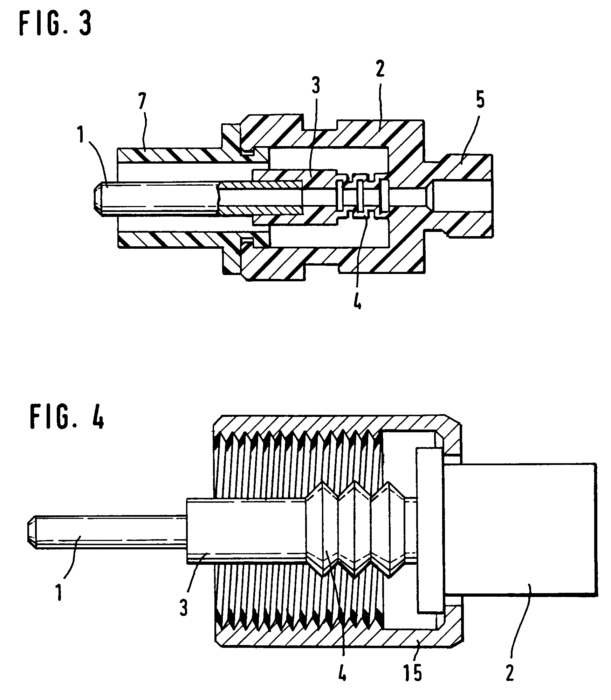

Figur 3 zeigt nochmals den prinzipiellen Aufbau des Steckers gemäss den Figuren 1 und 2 im Querschnitt. Das Steckergehäuse ist hier nicht eingezeichnet. Selbstverständlich könnte der Steckerkörper 2 auch eine andere Form aufweisen und beispielsweise zusammen mit dem Endstück 7 rotationssymmetrisch ausgebildet sein. Es sind auch Stecker denkbar, an denen in beliebiger Anordnung mehrere Stifte gehalten sind.

Figur 4 zeigt ein alternatives Ausführungsbeispiel eines Steckers, bei welchem die Aufnahmehülse 3 über ein Federelement 4 mit dem Steckerkörper 2 verbunden ist, welches nach der Art eines Faltenbalges aufgebaut ist. Anstelle einer Verriegelungsvorrichtung zum Befestigen des Steckers in einem Buchsenteil tritt eine Überwurfmutter 15.

## Patentansprüche

1. Stecker für einen Lichtwellenleiter mit wenigstens einem Steckerstift (1) und mit einem Steckerkörper (2), wobei der Steckerstift mit einem Federelement (4) axial federnd im Steckerkörper gehalten ist, dadurch gekennzeichnet, dass das Federelement (4) und wenigstens ein Teil des Steckerkörpers (2) gemeinsam als ein Stück ausgebildet sind.

2. Stecker nach Anspruch 1, dadurch gekennzeichnet, dass der Steckerstift (1) fest in einer Aufnahmehülse (3) gehalten ist, welche einstückig mit dem Federelement (4) ausgebildet ist.

3. Stecker nach Anspruch 2, dadurch gekennzeichnet, dass die Einheit bestehend aus Aufnahmehülse (3), Federelement (4) und Steckerkörper (2) aus Kunststoffmaterial hergestellt ist.

4. Stecker nach einem der Anprüche 2 bis 3, dadurch gekennzeichnet, dass das Federelement (4) als skelettartig unterbrochener Hohlzylinderabschnitt ausgebildet ist.

5. Stecker nach einem der Ansprüche 2 bis 4, dadurch gekennzeichnet, dass der Steckerstift (1) aus Metall, Metallkeramik oder Keramik hergestellt ist und dass er in die Aufnahmehülse (3) eingeklebt ist.

6. Stecker nach einem der Ansprüche 2 bis 5, dadurch gekennzeichnet, dass der Steckerkörper einstückig mit einer Nabe (5) zur Aufnahme des Lichtwellenleiter-Kabels ausgebildet ist.

7. Stecker nach einem der Ansprüche 2 bis 6, dadurch gekennzeichnet, dass am Steckerkörper (2) ein Endstück (7) mit einer Bohrung aufschnappbar ist, welche den grössten Teil des Steckerstifts (1) umgibt.

8. Stecker nach einem der Ansprüche 2 bis 7, dadurch gekennzeichnet, dass der Steckerkörper (1) axial verschiebbar in einem äusseren Steckergehäuse gelagert ist.

9. Stecker nach Anspruch 8, dadurch gekennzeichnet, dass der Steckerkörper für die Befestigung an einem Buchsenteil (14) wenigstens eine Klemmleiste (9) zum Einrasten einer Sperrklinke (10) aufweist, wobei die Sperrleiste aus einer Öffnung im Steckergehäuse (6) ragt und wobei das Steckergehäuse im Bereich der Sperrleiste mit einer Rampe (13) versehen ist, welche bei einer Zugkraft am Steckergehäuse die Sperrklinke (10) aus der Sperrleiste (9) hebt.

10. Stecker nach Anspruch 1, dadurch gekennzeichnet, dass der Steckerstift (1) einstückig mit dem Federelement (4) ausgebildet ist und unmittelbar durch letzteres am Stekkerkörper (2) gehalten ist.

## Claims

1. A plug for an optical fibre comprising at least one plug pin (1) and a plug body (2), wherein the plug pin is axially resiliently held with a spring element (4) in the plug body, characterised in that the spring element (4) and at least a part of the plug body (2) are formed jointly as one piece.

2. A plug according to claim 1 characterised in that the plug pin (1) is fixedly held in a mounting sleeve (3) which is formed in one piece with the spring element (4).

3. A plug according to claim 2 characterised in that the unit comprising the mounting sleeve (3), the spring element (4) and the plug body (2) is made from plastics material.

4. A plug according to one of claims 2 to 3 characterised in that the spring element (4) is in the form of a skeletally interrupted hollow-cylinder portion.

5. A plug according to one of claims 2 to 4 characterised in that the plug pin (1) is made from metal, metal-ceramic or ceramic and that it is glued into the mounting sleeve (3).

6. A plug according to one of claims 2 to 5 characterised in that the plug body is formed in one piece with a hub (5) for receiving the optical fibre cable.

7. A plug according to one of claims 2 to 6 characterised in that an end portion (7) having a bore can be snap-fitted on the plug body (2), the bore surrounding the largest part of the plug pin (1).

8. A plug according to one of claims 2 to 7 characterised in that the plug body (2) is axially displaceably mounted in an outer plug housing.

9. A plug according to claim 8 characterised in that for fixing to a socket member (14) the plug body has at least one clamping ridge (9) for the engagement of a locking pawl (10), wherein the locking ridge projects out of an opening in the plug housing (6) and wherein the plug housing is provided in the region of the locking ridge with a ramp (13) which when a pulling force is applied to the plug housing lifts the locking pawl (10) out of the locking ridge (9).

10. A plug according to claim 1 characterised in that the plug pin (1) is in one piece with the spring element (4) and is held directly by the latter on the plug body (2).

## Revendications

1. Connecteur pour une fibre optique, comportant au moins une broche (1) et un corps de fiche (2), la broche étant maintenue dans le corps de fiche grâce à une suspension élastique axiale à l'aide d'un élément faisant ressort (4), caractérisé en ce que l'élément faisant ressort (4) et une partie au moins du corps de fiche (2) sont réalisés conjointement en une seule pièce.

2. Connecteur selon la revendication 1, caractérisé en ce que la broche (1) est maintenue fermement dans une douille de réception (3) qui est réalisée d'une seule pièce avec l'élément faisant ressort (4).

3. Connecteur selon la revendication 2, caractérisé en ce que l'unité formée de la douille de réception (3), de l'élément faisant ressort (4) et du corps de fiche (2) est réalisée en matière plastique.

4. Connecteur selon l'une des revendications 2 à 3, caractérisé en ce que l'élément faisant ressort (4) est conçu comme une section cylindrique creuse interrompue à la manière d'une ossature.

5. Connecteur selon l'une des revendications 2 à 4, caractérisé en ce que la broche (1) est fabriquée en métal, en cermet ou en céramique, et en ce qu'elle est collée dans la douille de réception (3).

6. Connecteur selon l'une des revendications 2 à 5, caractérisé en ce que le corps de fiche est réalisé d'une seule pièce avec un moyeu (5) destiné à recevoir le câble de fibre optique.

7. Connecteur selon l'une des revendications 2 à 6, caractérisé en ce que, sur le corps de fiche (2), une pièce d'extrémité (7) pourvue d'un perçage est apte à être posée par ressort, lequel perçage entoure la majeure partie de la broche (1).

8. Connecteur selon l'une des revendications 2 à 7, caractérisé en ce que le corps de fiche (1) est monté, mobile axialement, dans une enveloppe de connecteur extérieure.

9. Connecteur selon la revendication 8, caractérisé en ce que le corps de fiche comporte, pour la fixation à un élément formant alvéole (14), au moins un rebord de blocage (9) destiné à l'enclenchement d'un cliquet de blocage (10), étant précisé que le rebord de blocage dépasse d'une ouverture de l'enveloppe de fiche (6) et que l'enveloppe de fiche est pourvue, dans la zone dudit rebord, d'une rampe (13) qui soulève le cliquet de blocage (10) hors du rebord de blocage (9) lorsqu'une force de traction est exercée sur l'enveloppe de fiche.

10. Connecteur selon la revendication 1, caractérisé en ce que la broche (1) est réalisée d'une seule pièce avec l'élément formant ressort (4) et est maintenue directement par celui-ci sur le corps de fiche (2).
